# EUROPEAN PATENT APPLICATION

(11) **EP 4 842 129 A1**
(43) Date of publication of application: **18.11.2026**
(21) Application number: 25751127.9
(22) Date of filing: 17.01.2025
(51) Int. Cl.: H04W 74/00, H04W 72/04

(54) **PASSIVE INTERNET OF THINGS DEVICE ACCESS METHOD AND APPARATUS, ELECTRONIC DEVICE, AND STORAGE MEDIUM**

(30) Priority: 06.02.2024 CN 202410171030
(71) Applicant: Datang Mobile Communications Equipment Co., Ltd., Beijing 100085 (CN)
(72) Inventor: WANG, Ruiwei, Beijing 100085 (CN); LIANG, Jing, Beijing 100085 (CN); LI, Jianxiang, Beijing 100085 (CN); WANG, Lei, Beijing 100085 (CN)
(74) Representative: Ipsilon
(86) International application number: PCT/CN2025/073046
(87) International publication number: WO 2025/167525

(57) **Abstract**

The present disclosure relates to the technical field of Internet of Things, and in particular to a passive Internet of Things device access method and apparatus, an electronic device, a storage medium, and a computer program product. The method comprises: receiving an access control signal used for indicating resource allocation information, and on the basis of the resource allocation information, determining group information corresponding to a terminal device; and on the basis of the group information of the terminal device, executing a predefined operation corresponding to the group information. This method enables differentiation of different Internet of Things devices, achieves grouping management of the Internet of Things devices, and further reduces signal interference between the Internet of Things devices.

## Description

### CROSS-REFERENCE

This application claims priority to Chinese Patent Application No. 202410171030.2, entitled "Access Method and Apparatus for an Ambient Internet of Things Device, Electronic Device, and Storage Medium", filed on February 6, 2024, which is incorporated herein by reference in its entirety.

### TECHNICAL FIELD

The present disclosure relates to the technical field of Internet of Things, and in particular to an access method and apparatus for an ambient Internet of Things device, an electronic device, a storage medium, and a computer program product.

### BACKGROUND

Ambient Internet of Things (AIoT) terminal devices generally refers to terminal devices that have no energy reserve or have an extremely low energy reserve. The AIoT terminal devices generally cannot initiate services actively, instead, they rely on network signals as excitation (energy supply), then perform simple processing on downlink messages and transmit uplink messages such as reflected signals. In some scenarios, after a network device sends a downlink message, it may receive reflected signals from a large number of Internet of Things terminals. since the reflected signals from different AIoT terminal devices may severely interfere with each other, the network device may fail to correctly demodulate the reflected signals.

### SUMMARY

In view of this, there is provided a reasonable access method for an ambient Internet of Things device, which can solve the problem of interference during accessing of a large number of ambient Internet of Things devices.

In a first aspect, the present disclosure provides an access method for an ambient Internet of Things device, including:
receiving an access control signal configured for indicating resource allocation information, and determining group information corresponding to a terminal device based on the resource allocation information; and
executing a predefined operation corresponding to the group information based on the group information of the terminal device.

In some exemplary embodiments, the resource allocation information includes a number for grouping;
determining the group information corresponding to the terminal device based on the resource allocation information includes:
determining a group index of the terminal device based on the number for grouping and an index parameter of the terminal device.

In some exemplary embodiments, the resource allocation information includes: a group number and a target group index;
determining the group information corresponding to the terminal device based on the resource allocation information includes:
determining a group index of the terminal device based on the group number and an index parameter of the terminal device; and
comparing the group index of the terminal device with the target group index to obtain an index comparison result.

In some exemplary embodiments, executing the predefined operation corresponding to the group information based on the group information of the terminal device includes:
when the index comparison result is that the group index of the terminal device is the same as the target group index, triggering execution of the predefined operation corresponding to the group index.

In some exemplary embodiments, the resource allocation information includes: a number for grouping, a target group index, and target terminal identification information;
determining the group information corresponding to the terminal device based on the resource allocation information includes:
determining a group index of the terminal device based on the number for grouping and an index parameter of the terminal device; and
comparing the group index of the terminal device with the target group index, and when an index comparison result is that the group index of the terminal device is the same as the target group index, comparing identification information of the terminal device with the target terminal identification information to obtain a terminal identification comparison result.

In some exemplary embodiments, executing the predefined operation corresponding to the group information includes:
when the terminal identification comparison result is that the identification information of the terminal device is the same as the target terminal identification, triggering execution of the predefined operation corresponding to the group index.

In some exemplary embodiments, the resource allocation information includes target signal parameter threshold information;
determining the group information corresponding to the terminal device based on the resource allocation information includes:
determining a parameter interval corresponding to each group according to the target signal parameter threshold information; and
determining a corresponding parameter interval and a group index corresponding to the parameter interval based on a target signal parameter of the terminal device.

In some exemplary embodiments, the resource allocation information includes any one or any combination of a number for grouping, a target group number index, target terminal identification information, and target parameter threshold information.

In some exemplary embodiments, the predefined operation includes any one of the following operations:
determining corresponding uplink resource data according to the group information, triggering the terminal device to execute an access operation, triggering the terminal device to feed back uplink information, and triggering the terminal device to send data to be executed to a bottom layer.

In some exemplary embodiments, the method further includes: in response to a next access control signal, comparing the group information of the terminal device with resource allocation information corresponding to the next access control signal, where the next resource allocation information is configured for indicating a terminal device executing the predefined operation; and
determining whether the predefined operation corresponding to the group information is executed according to a comparison result of the group information.

In some exemplary embodiments, the access control signal includes system information carrying the resource allocation information;
the method further includes:
determining, by the terminal device, corresponding group information according to the received system information; and
in response to an uplink service to be processed, determining corresponding uplink resource information according to the group information, and sending an uplink message corresponding to the uplink service to be processed to a network device based on the uplink resource information.

In some exemplary embodiments, the resource allocation information includes secondary grouping information;
the method further includes: determining corresponding uplink resource information of the terminal device in a group according to the secondary grouping information, and accessing a network based on the uplink resource information.

In some exemplary embodiments, the access control signal includes: a first access signal and a second access signal, where the first access signal is configured for indicating group information, and the second access signal is configured for indicating a target group index;
receiving the access control signal configured for indicating the resource allocation information, and determining the group information corresponding to the terminal device based on the resource allocation information includes:
receiving the first access signal, and determining a group index corresponding to the terminal device according to the first access signal; and
receiving the second access signal, and determining, according to the second access signal, whether the terminal device executes the corresponding predefined operation.

In some exemplary embodiments, when it is determined, according to the second access signal, to perform the predefined operation, the method further includes:
determining a network access sequence of the terminal device in a corresponding group based on a preset rule.

In some exemplary embodiments, the method further includes:
configuring, based on a network response configuration message, a response strategy of the terminal device to the access control signal after the terminal device accesses a network.

In some exemplary embodiments, the access control signal includes the network response configuration message.

In some exemplary embodiments, receiving the access control signal configured for indicating the resource allocation information includes:
in response to at least one excitation signal, receiving the access control signal configured for indicating the resource allocation information.

In some exemplary embodiments, the access control signal includes an excitation signal carrying the resource allocation information;
receiving the access control signal configured for indicating the resource allocation information, and determining the group information corresponding to the terminal device based on the resource allocation information includes:
receiving the excitation signal, and parsing the excitation signal to obtain the resource allocation information carried by the excitation signal; and
determining the group information corresponding to the terminal device based on the resource allocation information.

In some exemplary embodiments, the resource allocation information includes an excitation signal;
receiving the access control signal configured for indicating the resource allocation information, and determining the group information corresponding to the terminal device based on the resource allocation information includes:
receiving at least one of the excitation signals; and
determining the group information according to the received excitation signal based on a mapping relationship between the excitation signal and the group information.

In a second aspect, the present disclosure provides an access apparatus for an ambient Internet of Things device, including:
a group determining module configured to receive an access control signal configured for indicating resource allocation information, and determine group information corresponding to a terminal device based on the resource allocation information; and
an operation executing module configured to execute a predefined operation corresponding to the group information based on the group information of the terminal device.

In a third aspect, the present disclosure further provides an electronic device. The electronic device includes a memory and a processor, the memory storing a computer program, and the processor implementing the steps of the method according to any one of the embodiments of the first aspect when executing the computer program.

In a fourth aspect, the present disclosure further provides a computer-readable storage medium. The computer-readable storage medium has a computer program stored thereon, and the computer program, when executed by a processor, implements the steps of the method according to any one of the embodiments of the first aspect.

In a fifth aspect, the present disclosure further provides a computer program product including a computer program which, when executed by a processor, implements the steps of the method according to any one of the embodiments of the first aspect.

In a sixth aspect, the present disclosure provides an access method for an ambient Internet of Things device, including:
determining resource allocation information corresponding to a service to be processed; and
sending an access control signal to a terminal device, the access control signal being configured for indicating the resource allocation information, and the resource allocation information being configured for determining group information corresponding to the terminal device.

In some exemplary embodiments, the access control signal includes an excitation signal;
sending the access control signal to the terminal device includes:
sending at least one excitation signal corresponding to the resource allocation information to the terminal device based on a mapping relationship between the excitation signal and the group information.

In some exemplary embodiments, sending the access control signal includes:
sending an excitation signal carrying the resource allocation information, so that the terminal device parses the excitation signal to obtain the resource allocation information.

In a seventh aspect, the present disclosure provides an access apparatus for an ambient Internet of Things device, including:
a resource information determining module configured to determine resource allocation information corresponding to a service to be processed; and
a sending module configured to send an access control signal to a terminal device, the access control signal being configured for indicating the resource allocation information, and the resource allocation information being configured for determining group information corresponding to the terminal device.

In an eighth aspect, the present disclosure further provides an electronic device. The electronic device includes a memory and a processor, the memory storing a computer program, and the processor implementing the steps of the method according to any one of the embodiments of the sixth aspect when executing the computer program.

In a ninth aspect, the present disclosure further provides a computer-readable storage medium. The computer-readable storage medium has a computer program stored thereon, and the computer program, when executed by a processor, implements the steps of the method according to any one of the embodiments of the sixth aspect.

In a tenth aspect, the present disclosure further provides a computer program product including a computer program which, when executed by a processor, implements the steps of the method according to any one of the embodiments of the sixth aspect.

In an eleventh aspect, the present disclosure provides an ambient Internet of Things device access method, including:
determining resource allocation information corresponding to a service to be processed and sending an access control signal configured for indicating the resource allocation information by a network device; and
receiving the access control signal, determining corresponding group information based on the resource allocation information, and executing a predefined operation corresponding to the group information by a terminal device.

In a twelfth aspect, the present disclosure provides an ambient Internet of Things device access system, including:
a network device configured to determine resource allocation information corresponding to a service to be processed and send an access control signal configured for indicating the resource allocation information; and
a terminal device configured to receive the access control signal, determine corresponding group information based on the resource allocation information, and execute a predefined operation corresponding to the group information.

In a thirteenth aspect, the present disclosure further provides a computer-readable storage medium. The computer-readable storage medium has a computer program stored thereon, and the computer program, when executed by a processor, implements the steps of the method according to any one of the embodiments of the eleventh aspect.

In a fourteenth aspect, the present disclosure further provides a computer program product including a computer program which, when executed by a processor, implements the steps of the method according to any one of the embodiments of the eleventh aspect.

In the above access method for an ambient Internet of Things device, after receiving the access control signal sent by the network device, the ambient Internet of Things device can analyze the resource allocation information contained in the access control signal to calculate the group information corresponding to the terminal device, so that the corresponding predefined operation under the group can be executed. Different Internet of Things devices can be distinguished, and grouping management of the Internet of Things devices is realized, thereby reducing the signal interference among the Internet of Things devices.

The above description is only an overview of the technical solution of the present disclosure. In order to better understand the technical means of the present disclosure, it can be implemented in accordance with the contents of the specification, and in order to make the above and other objects, features, and advantages of the present disclosure more clearly understand, the specific implementation of the present disclosure is listed below.

### BRIEF DESCRIPTION OF THE DRAWINGS

Various other advantages and benefits will become apparent to those skilled in the art by reading through the following detailed description of embodiments. The drawings are only for purpose of illustrating the embodiments and not construed as limiting the present disclosure. In all the drawings, like reference numerals denote like components. In the drawings:
FIG. 1 is a schematic flowchart of an access method for an ambient Internet of Things device according to an embodiment of the present disclosure;
FIG. 2 is a schematic diagram of a method for determining group information of a terminal device according to an embodiment of the present disclosure;
FIG. 3 is a schematic diagram of another method for determining the group information of the terminal device according to an embodiment of the present disclosure;
FIG. 4 is a schematic diagram of a method for determining the group information by the terminal device according to system information according to an embodiment of the present disclosure;
FIG. 5 is a schematic diagram of a method for processing multiple access control signals by the terminal device according to an embodiment of the present disclosure;
FIG. 6 is a schematic diagram of a method for processing an access control signal according to an embodiment of the present disclosure;
FIG. 7 is a schematic flowchart of an access method for an ambient Internet of Things device according to an embodiment of the present disclosure;
FIG. 8 is a schematic flowchart of another access method for an ambient Internet of Things device according to an embodiment of the present disclosure;
FIG. 9 is a schematic diagram of an access apparatus for an ambient Internet of Things device according to an embodiment of the present disclosure;
FIG. 10 is a schematic diagram of another access apparatus for an ambient Internet of Things device according to an embodiment of the present disclosure;
FIG. 11 is a schematic diagram of an access system for an ambient Internet of Things device according to an embodiment of the present disclosure; and
FIG. 12 is a structural diagram of an electronic device according to an embodiment of the present disclosure.

### DETAILED DESCRIPTION

The embodiments of the technical solutions of the present disclosure will be described in detail below with reference to the accompanying drawings. The following embodiments are only used to illustrate the technical solutions of the present disclosure more clearly, and are therefore only used as examples, and shall not be used to limit the protection scope of the present disclosure.

Unless defined otherwise, all technical and scientific terms used herein have the same meaning as commonly understood by one of ordinary skill in the art to which this disclosure belongs. The terminology used herein is for the purpose of describing particular embodiments only and is not intended to limit the present disclosure. The terms "including", "comprising" and any variations thereof in the description, claims, and the above description of the drawings of the present disclosure are intended to cover a non-exclusive inclusion.

In the related art, ambient Internet of Things terminal devices generally have no energy reserve or only have an extremely low energy reserve. During operation, the ambient Internet of Things terminal devices typically perform operations such as reading and writing terminal register data and setting states after receiving a command from a network side. Typical operations include obtaining a device index of the terminal and querying data recorded in a register. After the network side sends a downlink signal, any terminals that receives the downlink signal may reflect the signal. If a large number of Internet of Things terminals are deployed in the network, the network side may receive a large number of reflected signals, and these signals may interfere with each other, making it impossible for the network side to perform demodulation.

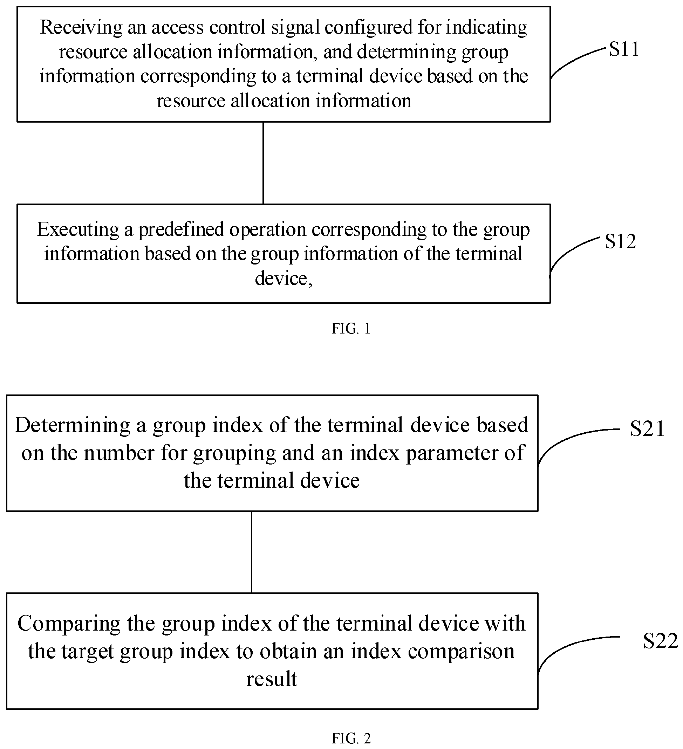

In some embodiments, an access method for an ambient Internet of Things device applied to a terminal device is provided, which can solve the technical defects in the related art. As shown in FIG. 1, the access method may include the following steps S11 and S12.

Step S11 includes receiving an access control signal configured for indicating resource allocation information, and determining group information corresponding to the terminal device based on the resource allocation information.

Step S12 includes executing a predefined operation corresponding to the group information based on the group information corresponding to the terminal device.

Exemplarily, the terminal device may be an ambient Internet of Things device, and the ambient Internet of Things device is capable of receiving the access control signal broadcast by a network device. The access control signal may be configured to indicate the resource allocation information, and the resource allocation information may be configured to indicate the group information of each terminal device. In addition, the resource allocation information may also be configured to indicate the group information of the terminal device which needs to execute a network side instruction currently, or the specific terminal device. After receiving the resource allocation information broadcast by a network side, the terminal device is capable of analyzing the resource allocation information, extracting parameters therein, and performing a calculation, thereby determining the group information corresponding to the terminal device. After the group information is determined, the predefined operation corresponding to the group information can be executed by the terminal device corresponding to a selected group, so that a response and feedback to the network side instruction are realized. In this way, grouping processing of the ambient Internet of Things device is realized.

In some exemplary embodiments, the resource allocation information may include: any one or any combination of: a number for grouping, a target group number index, target terminal identification information, and target parameter threshold information.

In some exemplary embodiments, the resource allocation information includes a number for grouping.

In the step S11, determining the group information corresponding to the terminal device based on the resource allocation information includes: determining a group index of the terminal device based on the number for grouping and an index parameter of the terminal device.

Specifically, the terminal device may calculate the group information of the terminal device based on the number for grouping. Specifically, the terminal device analyzes the currently received resource allocation information, and extracts the number for grouping carried therein. The terminal device performs a calculation according to the index parameter of the terminal device and the number for grouping, and determines the group index of the terminal device by using a calculation result. For example, a modulo operation (mod) may be performed between the index parameter and the number for grouping, and an obtained remainder is the group index of the terminal device. For example, the index parameter of the terminal device is 7, the number for grouping is 3, and the result of 7mod3 is 1, that is, the group index of the terminal device is 1. Exemplarily, the index parameter of the terminal device may be configured according to identity information of the terminal device, or according to a random number generated by the terminal device.

Certainly, in some exemplary embodiments, a grouping result calculated by the terminal device according to the number for grouping carried in the resource allocation information may be used as a temporary result of grouping of the terminal device by the network side. Alternatively, in some application scenarios, the grouping result may also be used as a permanent result of grouping of the terminal device by the network side.

Certainly, in other exemplary embodiments of the present disclosure, other calculation methods may be adopted to calculate the group index. For example, other algorithms that can realize terminal discretization may be adopted, which can distribute the terminal devices into the groups as evenly as possible according to the number for grouping configured by a network.

In some exemplary embodiments, the resource allocation information includes a number for grouping and a target group index.

Referring to FIG. 2, in the step S11, determining the group information corresponding to the terminal device based on the resource allocation information includes:
step S21: determining a group index of the terminal device based on the number for grouping and an index parameter of the terminal device; and
step S22: comparing the group index of the terminal device with the target group index to obtain an index comparison result.

In some exemplary embodiments, in the step S12, executing the predefined operation corresponding to the group information includes: when the index comparison result is that the group index of the terminal device is the same as the target group index, triggering execution of the predefined operation corresponding to the group index.

Exemplarily, the access control signal sent by the network device includes the resource allocation information, and the resource allocation information may include the number for grouping, which is configured for calculating the corresponding group index by the terminal device. In addition, the resource allocation information may also carry a parameter of the target group index, which is configured to indicate a terminal device group required by a current service of the network device, and indicates that the terminal device of the group is required to respond to the network device.

Specifically, the terminal device may first analyze the resource allocation information to obtain the number for grouping and a parameter value of the target group index included in the resource allocation information. Then, it may calculate the corresponding group index based on the number for grouping, for example, the group index of the terminal device is calculated to be 1 as described above. Subsequently, the terminal device may compare the current group index with the target group index to determine whether the parameters are consistent. If the parameters are determined to be consistent, the group to which the current terminal device belongs is the terminal device group required by the current service of the network side, and the predefined operation corresponding to the group needs to be executed by the terminal device. Alternatively, if the parameters are determined to be inconsistent, for example, the currently calculated group index of the terminal device is 1, and the target group index is 2, the terminal device does not belong to the group information of the terminal device selected by the network side for the current service, and in this case, the terminal device may not perform any operation, or simply feed back uplink information to the network side to indicate a response of the terminal device to the resource allocation information. The response information may carry a device identification and/or the group index of the terminal device.

For example, 2 bits may be predefined to indicate the number for grouping and the target group index, respectively. For example, in a case that a value of the 2 bits is 01, it implicitly indicates that the terminal devices are grouped into 4 groups, and the group index of the group of the device is 1.

Certainly, in some exemplary embodiments, the resource allocation information may carry one or more target group indexes, so as to realize selection of the group information of one or more terminal devices by the network side.

In some exemplary embodiments, the resource allocation information includes: a number for grouping, a target group index, and target terminal identification information.

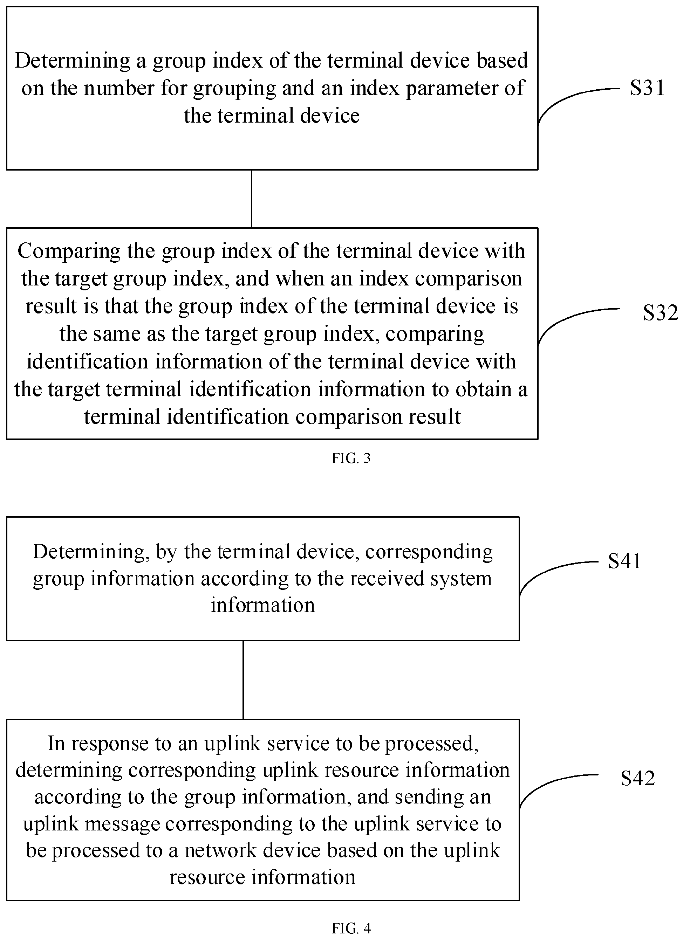

Referring to FIG. 3, in the step S11, determining the group information corresponding to the terminal device based on the resource allocation information includes:
step S31: determining a group index of the terminal device based on the number for grouping and an index parameter of the terminal device; and
step S32: comparing the group index of the terminal device with the target group index, and when an index comparison result is that the group index of the terminal device is the same as the target group index, comparing identification information of the terminal device with the target terminal identification information to obtain a terminal identification comparison result.

In some exemplary embodiments, in the step S12, executing the predefined operation corresponding to the group information includes: when the terminal identification comparison result is that the identification information of the terminal device is the same as the target terminal identification, triggering execution of the predefined operation corresponding to the group index.

Specifically, the resource allocation information may also include the target terminal identification information, and one or more pieces of target terminal identification information may be provided. The network side may select one or more specific terminal devices in the designated device group through the target terminal identification information. For example, the resource allocation information may include one or more pieces of target terminal identification information, so as to realize selection of one or more terminal devices by the network side.

Exemplarily, under the condition that the access control signal indicates a plurality of terminal devices, it may directly send a plurality of pieces of terminal device ID information, or may send terminal device ID range information, or a terminal device ID characteristic identification, or bit string data of several bits, and the bit string data is configured to correspond to a part of the terminal device ID. For example, the bit string data of several bits corresponds to data of several bits on the leftmost side (most significant bits) of the terminal device ID, and if they are matched, the terminal device is the selected terminal device. Similarly, the bit string data may correspond to data of several bits on a rightmost side (least significant bits) of the terminal device ID or data of several bits in the middle of the terminal device ID.

Specifically, after receiving the broadcast resource allocation information, the terminal device may first parse the resource allocation information to extract the number for grouping, the target group index, and the target terminal identification information included therein. There may be one or more target group indexes and one or more pieces of target terminal identification information. After the group information corresponding to the terminal device is calculated according to the number for grouping, the group information may be compared with the target group index firstly, and in the case that the group index comparison result is that the group information corresponding to the terminal device is different from the target group index, no operation is executed. Alternatively, in the case that the group information corresponding to the terminal device is the same as the target group index, the device index identification of the terminal device is compared with the target terminal identification information. In the case that the device index identification of the terminal device is the same as the target terminal identification information, the terminal device is the device required by the network side currently, and the terminal device may execute the predefined operation. Alternatively, in the case that the device index identification of the terminal device is the different from the target terminal identification information, the terminal device is not the terminal device required by the current service of the network side, and may not perform any operation, or may simply feed back uplink response information.

In some exemplary embodiments, the resource allocation information includes target signal parameter threshold information.

In the step S11, determining the group information corresponding to the terminal device based on the resource allocation information includes: determining a parameter interval corresponding to each group according to the target signal parameter threshold information; and determining a corresponding parameter interval and a group index corresponding to the parameter interval based on a target signal parameter of the terminal device.

Specifically, the network side may send the resource allocation information to the terminal device through an air interface, and the resource allocation information carries the target signal parameter threshold information. The target signal parameter threshold information may be a signal related threshold value. For example, the target signal parameter threshold may be a threshold of signals such as a Reference Signal Receiving Power (RSRP) signal, a Reference Signal Received Quality (RSRQ) signal, and a signal to interference plus noise ratio (SINR) signal, a received power threshold, or the like. Alternatively, the target signal parameter threshold may be a Timing Advance (TA) threshold, or the like. Certainly, the resource allocation information may indicate parameter thresholds for one or more target signals.

For example, in the case that the resource allocation information includes one RSRP signal threshold, the terminal devices are divided into two groups according to received signal strength lower than the configured threshold and received signal strength higher than the configured threshold. Alternatively, in the case that the resource allocation information includes two RSRP signal thresholds A and B, the terminal devices are divided into three groups according to received signal strength lower than A, received signal strength higher than A and lower than B, and received signal strength higher than B.

Exemplarily, the resource allocation information may also include a maximum value, a minimum value, and a step size of the signal threshold to implement grouping. For instance, the represented group information may include: {minimum value, minimum value + step size}, {minimum value, minimum value+ step size*2}, ..., {maximum value-step size, maximum value}. Alternatively, the resource allocation information may include a maximum value and a minimum value of the signal threshold, and the number for grouping to implement grouping. Correspondingly, a step size of the group is (maximum value-minimum value)/number for grouping.

For the terminal device, after the group information is calculated, the signal corresponding to the terminal device may be obtained, and the group index of the terminal device may be determined according to the parameter interval to which the target signal parameter of the terminal device belongs.

Exemplarily, the resource allocation information may also include other combinations of contents, for example, it may include a number for grouping and target terminal identification information, or it may include target parameter threshold information and a target group number index, or it may include target parameter threshold information, a target group number index and target terminal identification information, and so on.

In some exemplary embodiments, the predefined operation includes any one of: determining corresponding uplink resource data according to the group information, triggering the terminal device to execute an access operation, triggering the terminal device to feed back uplink information, and triggering the terminal device to send data to be executed to a bottom layer.

Specifically, in the step S12, after determining the corresponding group index, the terminal device may perform the predefined operation corresponding to the group.

Exemplarily, specific operations to be performed by different device groups may be predefined, and a corresponding relationship between the group and actions of the terminal device may be stored in the terminal device in advance. After the current group index is calculated, the terminal device can determine the specific operation which needs to be executed currently according to the relationship. In this case, the group index and/or the terminal device identification of the terminal device may be temporary.

Exemplarily, alternatively, the resource allocation information may carry indication information of the specific operation that needs to be performed by the specified device group.

Exemplarily, corresponding uplink resource data may be configured in advance for different groups of the terminal devices, and corresponding mapping data and resource information may be stored in the terminal devices. After determining the current grouping result, the terminal device may further determine a corresponding uplink resource according to the grouping result. Herein, the uplink resource data may be uplink time domain resources and/or frequency domain resources, signal emission powers, code modulation manners, or the like, configured for different groups of the terminal devices.

For example, for different time-frequency domain resources, the terminal device may use the group index as a calculation input parameter for sending time and/or sending frequency resources to realize discretization of the sending time/frequency domain resources of the terminal device. Alternatively, for different coding and modulation manners, the terminal device may use the group index as a calculation input parameter for coding and modulation, and different groups obtain different coding manners, so as to adopt different coding and modulation manners when the terminal devices send uplink signals. For different emission powers, different signal emission powers may be used by different device groups. For example, the terminal device uses the group index as a calculation input parameter for a sending power, and different device groups obtain different signal emission power parameters, so that different terminals adopt different powers for transmission.

Alternatively, configuring different uplink resource data for the device groups may also include a manner of configuring the uplink resources of some device groups to empty, and temporarily stopping sending uplink signals, so that some device groups can send uplink signals, and the other device groups cannot send uplink signals.

Exemplarily, the uplink message that the terminal device is triggered to feed back may be the uplink signal sent by the terminal device to the network side, and the uplink signal may be configured to notify the network side that the terminal device receives the access control signal and gives feedback. Alternatively, the uplink message that the terminal device is triggered to feed back may further include the group index of the terminal device, the terminal device identification, or the like. For example, in an application scenario of an intelligent warehouse, when the number of devices is counted, a network side may broadcast resource allocation information, and each terminal device may feed back an uplink message to the network side after calculating a grouping result of the device, and the uplink message carries parameters such as the grouping result, terminal identification information, and a working state of the terminal device. Alternatively, the terminal device may be triggered to send uplink data to the network side, and the uplink data may include more data contents of the terminal device such as device state information and device log data.

Exemplarily, the operation of triggering the terminal device to perform an access operation may be an operation of triggering the terminal device to perform random access.

Exemplarily, the terminal device is triggered to send data to be executed to the bottom layer, and the data to be executed may be service data sent to the bottom layer, or specific action data needing to be performed by the bottom layer, and the action data is executed by the bottom layer.

In some exemplary embodiments, receiving the access control signal configured for indicating the resource allocation information includes: in response to at least one excitation signal, receiving the access control signal configured for indicating the resource allocation information.

Specifically, the network side may first send one or more excitation signals to the terminal device to supply energy to the terminal device, and then send grouping resource allocation information to the terminal device to group the terminal device. The terminal device may first receive the one or more excitation signals from the network side to realize energy supply of the terminal device, then receive the resource allocation information, calculate the corresponding grouping result, and perform the predefined operation for the corresponding service.

In some exemplary embodiments, the access control signal includes an excitation signal carrying the resource allocation information.

In response to receiving the access control signal configured for indicating the resource allocation information, and determining the group information corresponding to the terminal device based on the resource allocation information includes: receiving the excitation signal, and parsing the excitation signal to obtain the resource allocation information carried by the excitation signal; and determining the group information corresponding to the terminal device based on the resource allocation information.

Specifically, the network side may carry the resource allocation information in the excitation signal. When the terminal device receives the excitation signal to realize energy supply, it parses the excitation signal, extracts the resource allocation information carried in the excitation signal, calculates the corresponding grouping result according to the resource allocation information, and feeds back the uplink message to the network side.

In some exemplary embodiments, the resource allocation information includes the excitation signal.

Receiving the access control signal configured for indicating the resource allocation information, and determining the group information corresponding to the terminal device based on the resource allocation information includes:
receiving at least one of the excitation signals; and
determining the group information according to the received excitation signal based on a mapping relationship between the excitation signal and the group information.

Specifically, a corresponding relationship between the excitation signals and the resource allocation information may be predefined, the resource allocation information is represented by the excitation signals, and the resource allocation information with different contents is represented by different combinations of the excitation signals. The combination of different excitation signals may include a combination of types of different excitation signals, a combination of excitation signals with different sending frequencies, or the like.

For example, different types of excitation signals, or combinations of excitation signals may be used to represent values of different numbers for grouping. Specifically, the network side sends a plurality of excitation signals circularly, and the terminal device obtains the number for grouping by identifying the types of the excitation signals.

Alternatively, the number for grouping may be represented by the number of the excitation signals within a preset period duration. The network side may continuously send a plurality of excitation signals at a preset time interval within a preset time. The terminal device counts the number of the excitation signals sent within the preset time according to the preset time interval to obtain the number for grouping. The plurality of excitation signals may be of the same type or different types.

Alternatively, a plurality of different types of excitation signals may be sequentially sent within a preset time, a sending time interval of the excitation signals is not limited, and the terminal device may determine the number for grouping according to the number of the received excitation signals. The network side may also send the excitation signals circularly, and the terminal device calculates the types of the received excitation signals within a preset time to obtain the number for grouping.

In some exemplary embodiments, the access control signal includes system information carrying the resource allocation information.

Referring to FIG. 4, the method further includes:
step S41: determining, by the terminal device, corresponding group information according to the received system information; and
step S42: in response to an uplink service to be processed, determining corresponding uplink resource information according to the group information, and sending an uplink message corresponding to the uplink service to be processed to a network device based on the uplink resource information.

Specifically, the Internet of Things may include some terminal devices with relatively strong capabilities, and these terminal devices can receive system information broadcast by the network side, select suitable resources according to configuration of the system information, and actively send the uplink signals according to actual service requirements of the terminal devices. The network side periodically broadcasts the system information, and the terminal device receives the system information and obtains the network group information. Then, according to the service requirement, sending of the uplink data can be actively triggered; the terminal device does not need to respond to a network downlink signal in real time to trigger subsequent actions.

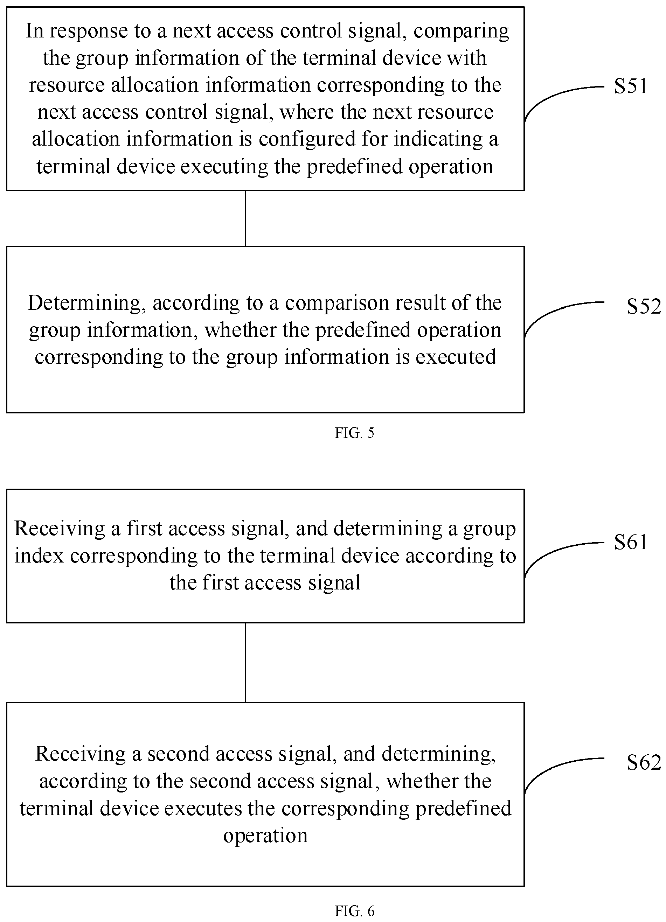

In some exemplary embodiments, referring to FIG. 5, the method further includes:
step S51: in response to a next access control signal, comparing the group information of the terminal device with resource allocation information corresponding to the next access control signal, where the next resource allocation information is configured for indicating a terminal device executing the predefined operation; and
step S52: determining, according to a comparison result of the group information, whether the predefined operation corresponding to the group information is executed.

Specifically, the network side may send one or more downlink messages according to actual service requirements, and the messages may instruct different device groups, different devices in the same device group, or different Internet of Things devices in different device groups to feed back the uplink messages. The terminal device can receive the plurality of downlink messages, parse each message, and give a response.

For example, the terminal device determines the corresponding group index to be 1 according to first resource allocation information, thereby triggering feedback of the uplink information, and execution of random access is triggered according to the target terminal identification information contained in second resource allocation information.

In some exemplary embodiments, the resource allocation information includes secondary grouping information. The method further includes: determining corresponding uplink resource information of the terminal device in a group according to the secondary grouping information, and accessing a network based on the uplink resource information.

Specifically, the access control signal may further include the secondary grouping information, and the secondary grouping signal may be configured to indicate that secondary grouping may be performed after the corresponding group of the terminal device is determined, and corresponding uplink resources are configured for each secondary group. The secondary group may include one or more terminal devices.

Exemplarily, in the case that a plurality of devices are divided into the same group, the devices may interfere with each other when sending uplink signals, causing a base station cannot receive the signals correctly. It may also be that strong uplink signals among the plurality of uplink signals can be received by the base station, but weak uplink signals cannot be received by the base station, which results in some devices not being counted by the network. In order to solve this problem, the network side may configure secondary groups for different device groups in advance, and a plurality of uplink resources may be allocated to each secondary group. The number of the uplink resources may be greater than or equal to the number of the terminal devices in the device group. In this way, each terminal device may access the network using one uplink resource and perform a specific service, thereby avoiding the problem of interference between the uplink signals.

Specifically, the network side may send the secondary grouping information (i.e., information indicating secondary grouping) to the terminal through the air interface, After receiving the group information, the terminal calculates the corresponding uplink transmission resource, and then executes subsequent actions. The secondary grouping information may include the uplink transmission resources allocated to each terminal device. Moreover, the uplink transmission resources may include a plurality of uplink transmission resources, and the specific number may be configured for the device by the network. Specifically, the number of the uplink transmission resources may be greater than or equal to the number of the terminal devices. If the terminal device successfully accesses the network on one uplink transmission resource, the subsequent resources are not triggered to execute subsequent work. If the terminal device fails to access the network, the subsequent resources are continuously triggered to execute the subsequent work. For example, one group includes three uplink resources and two terminal devices, the first terminal device successfully accesses the network on the first uplink resource, the second terminal device successfully accesses the network on the second uplink resource, and the network cannot detect a receiving power on the third resource, which indicates that the group has no more devices accessing the network. For the network side, intra-group resource configuration information may be carried in the access control signal, and the intra-group resource configuration information may be configured to describe the plurality of uplink resources that may be used by the terminal devices in the group. For each terminal device, the uplink resource may be selected randomly for network accessing.

In some exemplary embodiments, the access control signal includes: a first access signal and a second access signal, where the first access signal is configured for indicating group information, and the second access signal is configured for indicating a target group index;

Referring to FIG. 6, receiving the access control signal configured for indicating the resource allocation information, and determining the group information corresponding to the terminal device based on the resource allocation information includes:
step S61: receiving the first access signal, and determining a group index corresponding to the terminal device according to the first access signal; and
step S62: receiving the second access signal, and determining, according to the second access signal, whether the terminal device executes the corresponding predefined operation.

Specifically, the access control signal sent by the network side may include two sub-signals sent successively, the first access signal is configured to indicate the group information, and may include, for example, the number for grouping, and the second access signal may be configured to indicate the specific target group index. The terminal device may first receive the first access signal sent by the network side, and calculate the group information according to the signal to obtain the corresponding group index. Then, the terminal device may receive the second access signal sent by the network side, and the signal may explicitly or implicitly indicate the target group index. The terminal device can access the network when determining that the corresponding group index is consistent with the currently indicated target group index.

In some exemplary embodiments, when it is determined to perform the predefined operation according to the second access signal, the method further includes: determining a network access sequence of the terminal device in a corresponding group based on a preset rule.

Specifically, for the plurality of terminal devices in the group, execution measurement for accessing the network may be configured in advance, so that the terminal devices may access the network in a certain order. Exemplarily, each terminal device may be provided with a counter and a random number generator, and the access order of the terminal devices is determined based on a binary-tree random access method.

In particular, the terminal device may be provided with a counter of at least 8 bits and a generator for a random number 0 or 1. 1) After receiving the access control signal of the network side, the terminal device obtains a corresponding group number signal, and in the case that the group information corresponding to the terminal device is consistent with the currently indicated group number index, the terminal sets the counter to be 0 and starts the random number generator. For the device with the generated random number of 1, the counter is incremented by 1. For the device with the generated random number of 0, the counter is unchanged, and execution of the subsequent action (namely the action of accessing the network) is triggered. 2) In the case that the terminal device does not receive a successful response from the base station, when the counter is not equal to 0, the counter is incremented by 1; and when the counter is equal to 0, the random number generator is started. For the device with the generated random number of 1, the counter is incremented by 1. For the device with the generated random number of 0, the counter is unchanged, and execution of the subsequent action is triggered at a next resource position in the group. 3) In the case that the terminal receives the successful response from the base station and the received terminal identification is consistent with that of the current terminal, the terminal successfully accesses the network, and the subsequent action is not triggered in the group any more. 4) In the case that the terminal receives the successful response of the base station, but the received terminal identification is inconsistent with that of the current terminal, or in the case that the terminal receives the successful response of the base station, but the response does not carry the terminal identification, the counter is decremented by 1, and then, the terminal with the counter of 0 is triggered to execute the subsequent action at the next resource position in the group. The network controls the terminals to complete sequential accessing by sending successful response messages without the terminal identifications, thereby avoiding conflicts. The network can estimate maximum counter values generated by the devices, and trigger all possible terminal accessing by sending the plurality of successful response messages without the terminal identifications, thereby avoiding occurrence of counting missing.

In some exemplary embodiments, an Aloha algorithm may also be used to implement accessing of the terminal device to avoid a collision.

In some exemplary embodiments, executing the predefined operation corresponding to the group information based on the group information of the terminal device includes: receiving a network response configuration message, and based on the network response configuration message, configuring a response strategy of the terminal device to the access control signal after the terminal device accesses the network.

Specifically, the terminal device may receive the network response configuration message sent by the network side, and the message may include a silent duration after the terminal device accesses the network. The network side can pre-configure silent duration information after the terminal device accesses the network. Exemplarily, after the terminal successfully accesses the network, the network instructs the terminal to enter a silent period, i.e., to no longer respond to the signal from the network for a configured duration. In this way, when the network sends the group information to the terminal through the air interface next time, after the terminal receives the group information, the terminal does not execute the subsequent action any more if it is in the silent period, and the terminal continues to calculate the corresponding uplink transmission resource if it is in a non-silent period, and then executes the subsequent action. In this way, the network can determine that no counting missing occurs for each group by performing multiple times of triggering until no device in the group accesses the network.

In some embodiments, the access control signal includes the network response configuration message.

Exemplarily, the network side may configure the terminal silent duration in the access control signal, and may add the corresponding terminal identification in the access control signal, so that after the terminal device accesses the network, for the terminal selected by the network, the subsequent action that may be performed may be as follows: the terminal does not respond to paging of the network within a certain time, which reduces the interference in the uplink signals of the other terminals in the group, and facilitates the network to complete paging operations of the other terminals in the group.

Alternatively, in some embodiments, the terminal device identification and the corresponding silent duration may be added to the second access message.

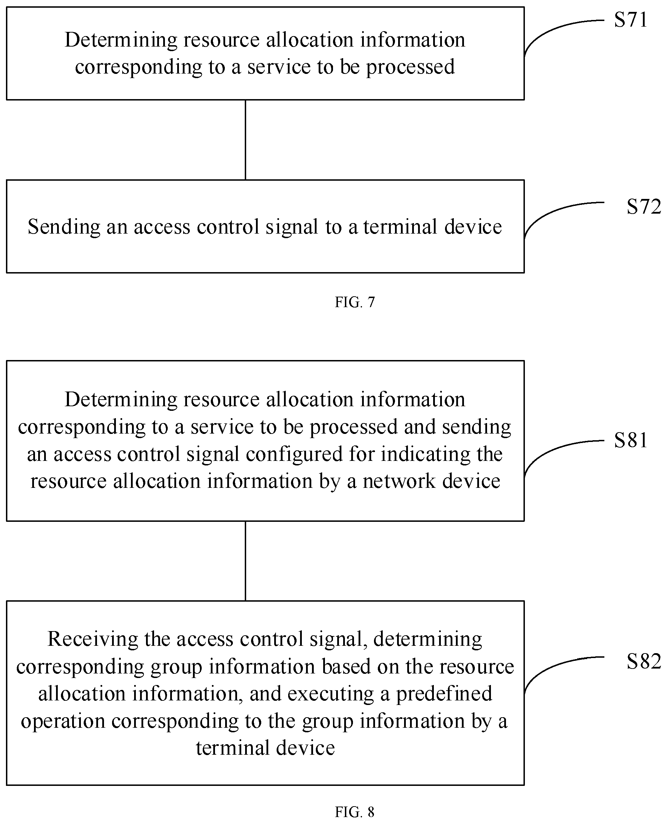

In some embodiments, an access method for an ambient Internet of Things is provided and may be applied to an Internet of Things network-side device. As shown in FIG. 7, the method may include the following steps:
step S71: determining resource allocation information corresponding to a service to be processed; and
step S72: sending an access control signal to a terminal device.

The access control signal is configured for indicating the resource allocation information, and the resource allocation information is configured for determining group information corresponding to the terminal device and executing a predefined operation corresponding to the group information.

In some exemplary embodiments, the access control signal includes an excitation signal.

Sending the access control signal includes: sending at least one excitation signal corresponding to the resource allocation information based on a mapping relationship between the excitation signal and the group information.

In some exemplary embodiments, sending the access control signal includes: sending an excitation signal carrying the resource allocation information, so that the terminal device parses the excitation signal to obtain the resource allocation information.

In some embodiments, an access method for an ambient Internet of Things device is provided and may be applied to an Internet of Things network-side device and a terminal device. As shown in FIG. 8, the method may include the following steps:
step S81: determining resource allocation information corresponding to a service to be processed and sending an access control signal configured for indicating the resource allocation information by a network device; and
step S82: receiving the access control signal, determining corresponding group information based on the resource allocation information, and executing a predefined operation corresponding to the group information by a terminal device.

In the method according to the embodiments of the present disclosure, the network device sends the group information to the terminal through the air interface, and the terminal performs the subsequent action according to the manner indicated by the group information. The group information may include the number for grouping, and the terminal calculates the group according to the number for grouping and executes the subsequent action. Alternatively, the group information may include the number for grouping and the group number index, and the terminal calculates the group according to the number for grouping, determines that the received group number index is equal to the group to which the terminal belongs, and executes the subsequent action. Alternatively, the group information may include the number for grouping, the group number index and the terminal identification information, and on the basis of the above-described operations, whether the received terminal identification information is consistent with the terminal device and whether the terminal gives a response are determined, and the corresponding uplink signal emission manner is executed. The terminal device calculates the group to which the terminal device belongs according to the group information, and may further determine the uplink resource according to the group to which the terminal device belongs. With the method, grouping management of the terminal devices can be realized, and the uplink signals can be reflected by the Internet of Things devices in a grouped manner, thus reducing the number of the uplink signals received by the network at one time, reducing the interference among the signals and improving a receiving performance.

It should be understood that, although the steps in the flow charts involved in the above embodiments are shown in sequence as indicated by the arrows, the steps are not necessarily performed in sequence as indicated by the arrows. Unless explicitly stated herein, the steps are not limited to being performed in the exact order and may be performed in other orders. At least part of the steps in the flow charts involved in the above embodiments may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

Based on the same inventive concept, embodiments of the present disclosure further provide an apparatus for implementing the above access method for an ambient Internet of Things device. The implementation solution for solving problems provided by the apparatus is similar to the implementation solution described in the above method, and therefore, for the specific definitions in one or more embodiments of the storage management apparatus provided below, reference may be made to the definitions of the storage management method in the above description, and the definitions are not repeated herein.

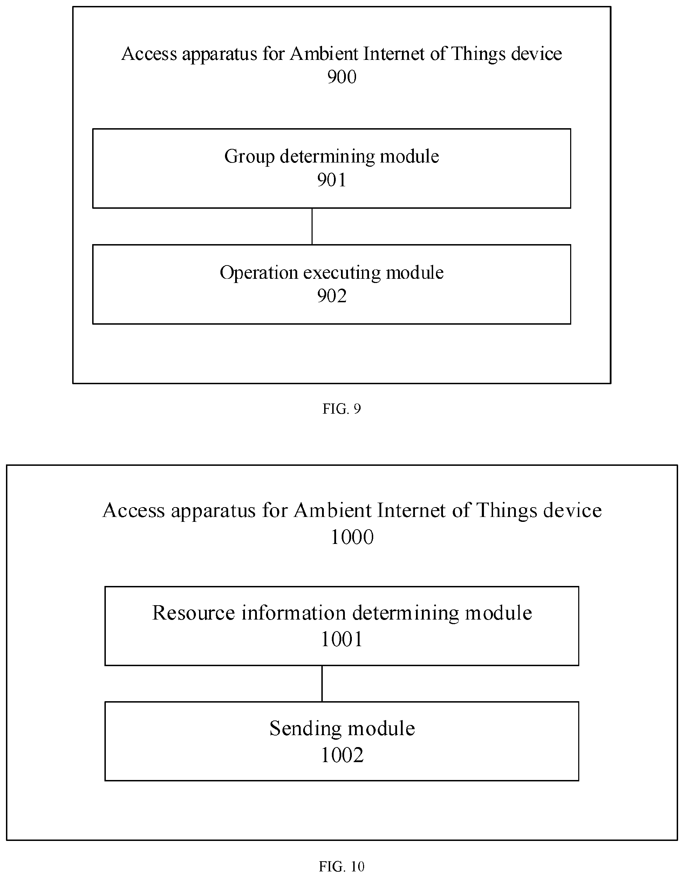

In some embodiments, as shown in FIG. 9, there is provided an access apparatus for an ambient Internet of Things device. The apparatus 900 includes:
a group determining module 901 configured to receive an access control signal configured for indicating resource allocation information, and determine group information corresponding to a terminal device based on the resource allocation information; and
an operation executing module 902 configured to execute a predefined operation corresponding to the group information based on the group information corresponding to the terminal device.

In some embodiments, the resource allocation information includes: a number for grouping.

The group determining module 901 is configured to determine a group index of the terminal device based on the number for grouping and an index parameter of the terminal device.

In some embodiments, the resource allocation information includes: a number for grouping and a target group index;
the group determining module 901 is configured to determine a group index of the terminal device based on the number for grouping and an index parameter of the terminal device, and compare the group index of the terminal device with the target group index to obtain an index comparison result.

In some embodiments, the operation executing module 902 is configured to trigger execution of the predefined operation corresponding to the group index when the index comparison result is that the group index of the terminal device is the same as the target group index.

In some embodiments, the resource allocation information includes: a number for grouping, a target group index, and target terminal identification information;
the group determining module 901 is configured to determine a group index of the terminal device based on the number for grouping and an index parameter of the terminal device; compare the group index of the terminal device with the target group index, and when an index comparison result is that the group index of the terminal device is the same as the target group index, compare identification information of the terminal device with the target terminal identification information to obtain a terminal identification comparison result.

In some embodiments, the operation executing module 902 is configured to trigger execution of the predefined operation corresponding to the group index when the terminal identification comparison result is that the identification information of the terminal device is the same as the target terminal identification information.

In some embodiments, the resource allocation information includes target signal parameter threshold information;
the group determining module 901 is configured to determine a parameter interval corresponding to each group according to the target signal parameter threshold information, and determine a corresponding parameter interval and a group index corresponding to the parameter interval based on a target signal parameter of the terminal device.

In some embodiments, the resource allocation information includes any one or any combination of a number for grouping, a target group number index, target terminal identification information, and target parameter threshold information.

In some embodiments, the predefined operation includes any one of the following operations:
determining corresponding uplink resource data according to the group information, triggering the terminal device to execute an access operation, triggering the terminal device to feed back uplink information, and triggering the terminal device to send data to be executed to a bottom layer.

In some embodiments, the apparatus 900 includes: a signal analyzing module configured to, in response to a next access control signal, compare the group information of the terminal device with resource allocation information corresponding to the next access control signal, where the next resource allocation information is configured for indicating a terminal device executing the predefined operation; and determine whether the predefined operation corresponding to the group information is executed according to a comparison result of the group information.

In some embodiments, the access control signal includes: system information carrying the resource allocation information, and the apparatus 900 includes a system information processing module configured to: determine, by the terminal device, corresponding group information according to the received system information; and in response to an uplink service to be processed, determine corresponding uplink resource information according to the group information, and send an uplink message corresponding to the uplink service to be processed to a network device based on the uplink resource information.

In some embodiments, the resource allocation information includes secondary grouping information, and the apparatus 900 includes a secondary grouping module configured to determine corresponding uplink resource information of the terminal device in a group according to the secondary grouping information, and access a network based on the uplink resource information.

In some embodiments, the access control signal includes a first access signal and a second access signal, where the first access signal is configured for indicating group information, and the second access signal is configured for indicating a target group index; the group determining module 901 is configured to: receive the first access signal, and determine a group index corresponding to the terminal device according to the first access signal; and receive the second access signal, and determine whether the terminal device executes the corresponding predefined operation according to the second access signal.

In some embodiments, the apparatus 900 further includes an access configuring module configured to: when the predefined operation is determined to be executed according to the second access signal, determine a network access sequence of the terminal device in a corresponding group based on a preset rule.

In some embodiments, the operation executing module 902 is configured to: receive a network response configuration message, and configure a response strategy of the terminal device to the access control signal after the terminal device accesses the network based on the network response configuration message.

In some embodiments, the access control signal includes the network response configuration message.

In some embodiments, the group determining module 901 is configured to, in response to at least one excitation signal, receive the access control signal used for indicating the resource allocation information.

In some embodiments, the group determining module 901 is configured to: receive the excitation signal, and parses the excitation signal to obtain the resource allocation information carried by the excitation signal; and based on the resource allocation information, determine the group information corresponding to the terminal device; the access control signal includes an excitation signal carrying the resource allocation information.

In some embodiments, the group determining module 901 is configured to: receive at least one of the excitation signals; and determine the group information according to the received excitation signal based on a mapping relationship between the excitation signal and the group information; the resource allocation information includes an excitation signal.

In some embodiments, as shown in FIG. 10, there is provided an access apparatus 1000 for an ambient Internet of Things device which may be applied to a communication device. The apparatus 1000 includes:
a resource information determining module 1001 configured to determine resource allocation information corresponding to a service to be processed; and
a sending module 1002 configured to send an access control signal to a terminal device, the access control signal being configured for indicating the resource allocation information, and the resource allocation information being configured for determining group information corresponding to the terminal device.

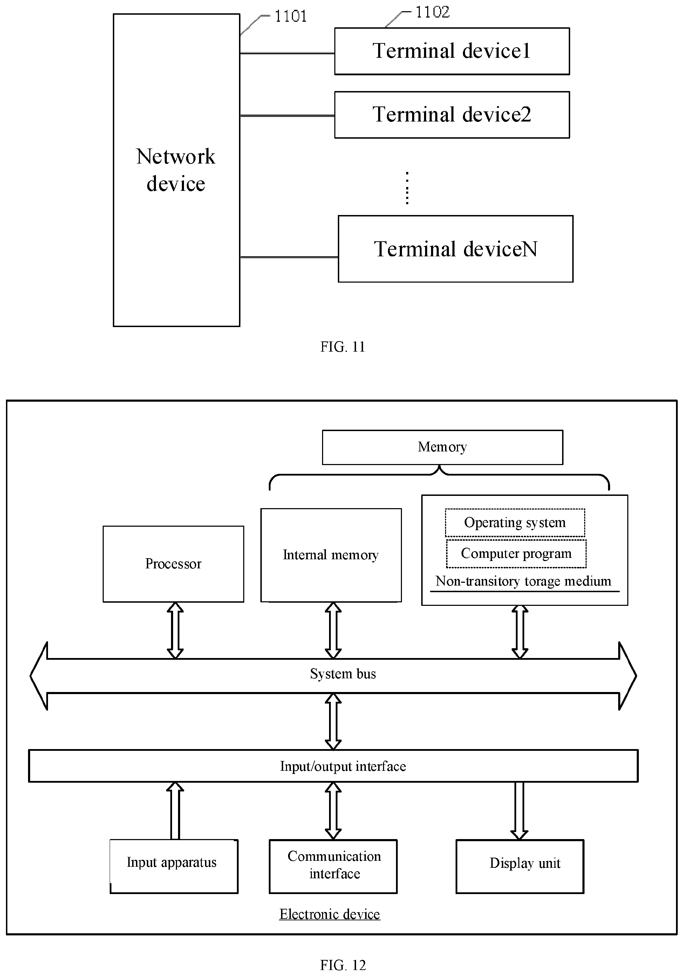

In some embodiments, as shown in FIG. 11, there is provided an access system for an ambient Internet of Things device, including:
a network device 1101 configured to determine resource allocation information corresponding to a service to be processed and send an access control signal configured for indicating the resource allocation information; and
a terminal device 1102 configured to receive the access control signal, determine corresponding group information based on the resource allocation information, and execute a predefined operation corresponding to the group information.

The modules in the ambient Internet of Things device access apparatus and system may be wholly or partially implemented by software, hardware and a combination thereof. The modules may be embedded in or independent of a processor in a computer device in hardware, or may be stored in a memory in the computer device in software, such that the processor can conveniently call the modules to execute the operations corresponding to the modules.

In some embodiments, there is provided a communication device, and a structural view thereof may be shown in FIG. 12. The device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-transitory storage medium and an internal memory. The non-transitory storage medium stores an operating system and a computer program. The internal memory provides an environment for running of the operating system and the computer program in the non-transitory storage medium. The input/output interface of the computer device is configured to exchange information between the processor and an external device. The communication interface of the computer device is configured to be communicated with an external terminal in a wired or wireless mode, and the wireless mode can be implemented through WIFI, a mobile cellular network, NFC (near field communication), or other technologies. The computer program is executed by the processor to implement a multi-hop based proximity service communication method. The display unit of the computer device is configured to form a visually visible picture and can be a display screen, a projection apparatus, or a virtual reality imaging apparatus. The display screen may be a liquid crystal display screen or an electronic ink display screen, and the input apparatus of the computer device may be a touch layer covering the display screen, or may be a key, a trackball or a touch pad arranged on a casing of the computer device, or may be an external keyboard, touch pad, mouse, or the like.

Those skilled in the art will appreciate that the structure shown in FIG. 12 is only a block diagram of a part of the structure associated with the disclosed solution and does not constitute a limitation on the computer device to which the disclosed solution is applied, and a particular computer device may include more or fewer components than shown components, or combine certain components, or have a different arrangement of components.

In some embodiments, there is further provided an electronic device, including a memory and a processor, the memory storing a computer program, and the processor implementing the steps of the above method embodiments when executing the computer program.

In some embodiments, there is provided a computer-readable storage medium having a computer program stored thereon, the computer program, when executed by a processor, implementing the steps of the above method embodiments.

In some embodiments, there is provided a computer program product including a computer program which, when executed by a processor, implements the steps in the above method embodiments.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, databases or other media used in the embodiments of the present disclosure can include at least one of a non-transitory memory and a transitory memory. The non-transitory memory may include a Read-Only Memory (ROM), a magnetic tape, a floppy disk, a flash memory, an optical memory, a high-density embedded non-transitory memory, a Resistive Random Access Memory (ReRAM), a Magneto resistive Random Access Memory (MRAM), a Ferroelectric Random Access Memory (FRAM), a Phase Change Memory (PCM), a graphene memory, or the like. The transitory memory may include a Random Access Memory (RAM), an external cache memory, or the like. By way of illustration and not limitation, the RAM can take many forms such as a Static Random Access Memory (SRAM) and a Dynamic Random Access Memory (DRAM). The databases involved in the embodiments of the present disclosure may include at least one of relational and non-relational databases. The non-relational database may include, but is not limited to, a block chain-based distributed database, or the like. The processors referred to in the embodiments of the present disclosure may include, but are not limited to, general processors, central processors, graphics processors, digital signal processors, programmable logic units, data processing logic units based on quantum calculations, or the like.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the protection scope of the present disclosure should be subject to the appended claims. Finally, it should be noted that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial or all technical features therein; these modifications or substitutions do not make essence of corresponding technical solutions depart from the scope of technical solutions of embodiments of the present disclosure, and all of them should be included in the scope of the claims and description of the present disclosure. Particularly, as long as structural conflicts do not exist, all technical features mentioned in all the embodiments may be combined together in any mode. The present disclosure is not limited to the specific embodiments disclosed in the description, but includes all technical solutions falling into the scope of the claims.

## Claims

1. An access method for an ambient Internet of Things device, comprising:
receiving an access control signal configured for indicating resource allocation information, and determining group information corresponding to a terminal device based on the resource allocation information; and
executing a predefined operation corresponding to the group information based on the group information of the terminal device.

2. The method according to claim 1, wherein the resource allocation information comprises a number for grouping;
determining the group information corresponding to the terminal device based on the resource allocation information comprises:
determining a group index of the terminal device based on the number for grouping and an index parameter of the terminal device.

3. The method according to claim 1, wherein the resource allocation information comprises a number for grouping and a target group index;
determining the group information corresponding to the terminal device based on the resource allocation information comprises:
determining a group index of the terminal device based on the group number and an index parameter of the terminal device; and
comparing the group index of the terminal device with the target group index to obtain an index comparison result.

4. The method according to claim 3, wherein executing the predefined operation corresponding to the group information based on the group information of the terminal device comprises:
when the index comparison result is that the group index of the terminal device is the same as the target group index, triggering execution of the predefined operation corresponding to the group index.

5. The method according to claim 1 or 2, wherein the resource allocation information comprises: a number for grouping, a target group index, and target terminal identification information;
determining the group information corresponding to the terminal device based on the resource allocation information comprises:
determining a group index of the terminal device based on the number for grouping and an index parameter of the terminal device; and
comparing the group index of the terminal device with the target group index, and when an index comparison result is that the group index of the terminal device is the same as the target group index, comparing identification information of the terminal device with the target terminal identification information to obtain a terminal identification comparison result.

6. The method according to claim 5, wherein executing the predefined operation corresponding to the group information comprises:
when the terminal identification comparison result is that the identification information of the terminal device is the same as the target terminal identification, triggering execution of the predefined operation corresponding to the group index.

7. The method according to claim 1, wherein the resource allocation information comprises target signal parameter threshold information;
determining the group information corresponding to the terminal device based on the resource allocation information comprises:
determining a parameter interval corresponding to each group information according to the target signal parameter threshold information; and
determining a parameter interval of a target signal parameter of the terminal device and a group index corresponding to the parameter interval.

8. The method according to claim 1, wherein the resource allocation information comprises: any one or any combination of a number for grouping, a target group number index, target terminal identification information, and target parameter threshold information.

9. The method according to claim 1, wherein the predefined operation comprises any one of the following operations:
determining corresponding uplink resource data according to the group information, triggering the terminal device to execute an access operation, triggering the terminal device to feed back uplink information, and triggering the terminal device to send data to be executed to a bottom layer.

10. The method according to claim 1, further comprising:
in response to a next access control signal, comparing the group information of the terminal device with resource allocation information corresponding to the next access control signal, wherein the next resource allocation information is configured for indicating a terminal device executing the predefined operation; and
determining whether the predefined operation corresponding to the group information is executed according to a comparison result of the group information.

11. The method according to claim 1, wherein the access control signal comprises system information carrying the resource allocation information;
the method further comprises:
determining, by the terminal device, corresponding group information according to the received system information; and
in response to an uplink service to be processed, determining corresponding uplink resource information according to the group information, and sending an uplink message corresponding to the uplink service to be processed to a network device based on the uplink resource information.

12. The method according to claim 1 or 11, wherein the resource allocation information comprises secondary group information;
the method further comprises:
determining corresponding uplink resource information of the terminal device in a group according to the secondary grouping information, and accessing a network based on the uplink resource information.

13. The method according to claim 1, wherein the access control signal comprises: a first access signal and a second access signal, wherein the first access signal is configured for indicating group information, and the second access signal is configured for indicating a target group index;
receiving the access control signal configured for indicating the resource allocation information, and determining the group information corresponding to the terminal device based on the resource allocation information comprises:
receiving the first access signal, and determining a group index corresponding to the terminal device according to the first access signal; and
receiving the second access signal, and determining, according to the second access signal, whether the terminal device executes the corresponding predefined operation.

14. The method according to claim 13, wherein when it is determined, according to the second access signal, to perform the predefined operation, the method further comprises:
determining a network access sequence of the terminal device in a corresponding group based on a preset rule.

15. The method according to claim 1, further comprising:
configuring, based on a network response configuration message, a response strategy of the terminal device to the access control signal after the terminal device accesses a network.

16. The method according to claim 15, wherein the access control signal comprises the network response configuration message.

17. The method according to claim 1, wherein receiving the access control signal configured for indicating the resource allocation information comprises:
in response to at least one excitation signal, receiving the access control signal configured for indicating the resource allocation information.

18. The method according to claim 1, wherein the access control signal comprises: an excitation signal carrying the resource allocation information;
receiving the access control signal configured for indicating the resource allocation information, and determining the group information corresponding to the terminal device based on the resource allocation information comprises:
receiving the excitation signal, and parsing the excitation signal to obtain the resource allocation information carried by the excitation signal; and
determining the group information corresponding to the terminal device based on the resource allocation information.

19. The method according to claim 1, wherein the resource allocation information comprises an excitation signal;
receiving the access control signal configured for indicating the resource allocation information, and determining the group information corresponding to the terminal device based on the resource allocation information comprises:
receiving at least one of the excitation signals; and
determining the group information according to the received excitation signal based on a mapping relationship between the excitation signal and the group information.

20. An access method for an ambient Internet of Things device, comprising:
determining resource allocation information corresponding to a service to be processed; and
sending an access control signal to a terminal device, the access control signal being configured for indicating the resource allocation information, and the resource allocation information being configured for determining group information corresponding to the terminal device.

21. The method according to claim 20, wherein the access control signal comprises: an excitation signal;
sending the access control signal to the terminal device comprises:
sending at least one excitation signal corresponding to the resource allocation information to the terminal device based on a mapping relationship between the excitation signal and the group information.

22. The method according to claim 20, wherein sending the access control signal comprises:
sending an excitation signal carrying the resource allocation information to the terminal device, the excitation signal being configured for being parsed by the terminal device to obtain the resource allocation information.

23. An access method for an ambient Internet of Things device, comprising:
determining resource allocation information corresponding to a service to be processed and sending an access control signal configured for indicating the resource allocation information by a network device; and
receiving the access control signal, determining corresponding group information based on the resource allocation information, and executing a predefined operation corresponding to the group information by a terminal device.

24. An access method for an ambient Internet of Things device, comprising:
a group determining module configured to receive an access control signal configured for indicating resource allocation information, and determine group information corresponding to a terminal device based on the resource allocation information; and
an operation executing module configured to execute a predefined operation corresponding to the group information based on the group information of the terminal device.

25. An access apparatus for an ambient Internet of Things device, comprising:
a resource information determining module configured to determine resource allocation information corresponding to a service to be processed; and
a sending module configured to send an access control signal to a terminal device, the access control signal being configured for indicating the resource allocation information, and the resource allocation information being configured for determining group information corresponding to the terminal device.

26. An access system for an ambient Internet of Things device, comprising:
a network device configured to determine resource allocation information corresponding to a service to be processed and send an access control signal configured for indicating the resource allocation information; and
a terminal device configured to receive the access control signal, determine corresponding group information based on the resource allocation information, and execute a predefined operation corresponding to the group information.

27. An electronic device, comprising a memory and a processor, the memory storing a computer program, and the processor implementing the steps of the method according to any one of claims 1 to 14, claims 15 to 17, or claim 18 when executing the computer program.

28. A computer-readable storage medium having a computer program stored thereon, the computer program, when executed by a processor, implementing the steps of the method according to any one of claims 1 to 19, claims 20 to 22, or claim 23.

29. A computer program product comprising a computer program, the computer program, when executed by a processor, implementing the steps of the method according to any one of claims 1 to 19, claims 20 to 22 or claim 23.
